# EUROPEAN PATENT APPLICATION

(11) **EP 3 413 378 A1**
(43) Date of publication of application: **12.12.2018**
(21) Application number: 17174559.9
(22) Date of filing: 06.06.2017
(51) Int. Cl.: H01M 2/34, H01M 10/44, H02J 7/00

(54) **BATTERY SYSTEM**

(71) Applicant: Robert Bosch GmbH, 70442 Stuttgart (DE); Lithium Energy and Power GmbH & Co. KG, 70469 Stuttgart (DE)
(72) Inventor: Deromelaere, Gaetan, Lithium Energy And Power Corpo, 601 8520 (JP); Hoerlein, Rainer Heinrich, 71679 Asperg (DE); Klinsmann, Markus, 70195 Stuttgart (DE)

(57) **Abstract**

The invention regards a battery system comprising at least one battery cell including a first electrode, a second electrode and a separator for separating the first electrode and second electrode, a short-circuit line for short-circuiting the first electrode and second electrode, wherein the shortcut line includes a switch for selectively opening and closing the short-circuit line, a control device for actuating the switch to close the shortcut line after detection of a damage zone with an internal shortcut of the battery cell, wherein a local temperature at the damaged zone is limited to a predefined first maximum value and the overall temperature of the battery cell is limited to a second maximum value, wherein the first maximum value is higher than the second maximum value, and wherein the separator comprises a medium adapted to block ionic conductivity when heated above a temperature of a minimum value, which is lower than the second maximum value.

## Description

### Prior art

The invention regards a battery system. Particularly, the battery system has a high energy density such that measures have to be taken in order to avoid critical behavior in case of damage.

Addressing customer demand, Li-ion battery cells with increasingly high energy density are currently being introduced to the market. Especially the use of Ni-rich cathode materials such as NCM622, NCM811 or NCA enable unprecedented energy densities. With the increase in energy density the safety of such battery cells under abuse conditions (e.g. nail penetration, crush) and under operating conditions (e.g. driving, charging) with respect to internal short circuits becomes more and more of an issue. If the temperature of the cell (globally over the entire cell or locally at an internal short circuit) exceeds a certain value, an exothermal reaction will be triggered which leads to rapid self-heating and thus fire or explosion of the cell. This is also called thermal runaway. The onset temperature for the runaway depends on the materials of the cell and tends to decrease with increasing Ni-content of the cell.

Further, form the prior art, safety concepts for battery cells are known which utilize an external fast discharge circuit to limit the energy dissipated inside the cell under abuse conditions (for example nail penetration) and in the case of internal short circuits. The prior art describes mechanism for limiting the energy dissipation in the damage zone to prevent a hazardous event in the battery cell. The damage zone is defined as an area inside the cell where a short circuit of one or more battery layers has occurred due to e.g. nail penetration, a particle inside the cell, crush, dendrites, or others. While this is an important feature, however it is not sufficient to ensure safe operation of the battery cell under all operating conditions as other secondary effects (e.g. global heating of the cell) can also lead to hazardous events.

### Disclosure of the invention

This invention describes a technical concept to limit the temperature rise inside a battery cell during a hazardous event. Such hazardous events comprise short circuit due to abuse or a damage inside the cell. Due to such a limitation, the cell does not reach the temperature, neither locally nor globally, which will lead to thermal runaway and thus a high hazard level.

The inventive battery system comprises at least one battery cell, a switchable short circuit path, preferably between the positive and negative electrodes, and a control device. The battery cell includes a first electrode, a second electrode and a separator. The separator is provided for separating the first electrode and second electrode. Particularly, the separator allows ionic transfer between the first electrode and the second electrode. Hence, an electrochemical reaction can take place such that an electrical voltage can be supplied via the first electrode and the second electrode. Preferably, the first electrode and the second electrode are connected to respective terminals of the battery system in order to supply electrical power to other devices.

The shortcut line is provided for short-circuiting the first electrode and second electrode, wherein the short-circuit line includes a switch for selectively opening and closing the short-circuit line. The switch may be of such a type that only can be operated once. Therefore, an external short-circuit can be established by closing the short-circuit line via the switch. When the short-circuit line is closed, a discharging current will flow through the external short-circuit line. The combination of short-circuit line and switch is also referred to as fast discharge device. The switch can be implemented as antifuse or a semiconductor-based device but is not limited to these concepts.

The control device is adapted for actuating the switch to close the short-circuit line. Particularly, the control device is adapted to actuate the switch after detection of a damage zone with an internal short-circuit of the battery cell. The internal short-circuit can be determined via monitoring devices known from the prior art. In the following, actuating the switch to close the shortcut line is also described as triggering the switch.

A local temperature at the damaged zone is limited to a predefined first maximum value. Further, the overall temperature of the battery cell is limited to a second maximum value. In particular, the limitation to the first maximum value and the second maximum value is performed by accordingly adjusting the electrical resistance of the shortcut line when manufacturing the battery system. In this way, thermal runaway can be prevented. The first maximum value is higher than the second maximum value. This means that the battery cell can heat up locally to a higher temperature for a short time than globally without triggering thermal runaway.

The separator comprises a medium adapted to block ionic conductivity when heated above a temperature of a minimum value, which is lower than the second maximum value. Therefore, the battery cell can be heat up until reaching the minimum value, without the risk of triggering thermal runaway. As soon as the temperature reaches the minimum value, the medium starts blocking ionic conductivity thereby reducing the discharging current. The reduced discharging current is not sufficient to further heat up the battery cell such that the battery cell is transferred to a safe state. Such a behavior is also termed shutdown of the battery cell. The blocking of ionic conductivity is preferably irreversible such that the lower temperature due to the reduced discharging current does not reverse the blocking of the ionic conductivity. In the following, triggering the shutdown of the battery cell means heating up the battery cell to the minimum temperature such that the medium starts blocking ionic conductivity.

With the above measures, the battery cell can, in case of hazardous events, be transferred into a safe state without the risk of triggering thermal runaway.

The dependent claims contain advantageous embodiments of the invention.

In a preferred embodiment, the separator is a shutdown separator. Shutdown separators as such are known from the prior art. Particularly, shutdown separators allow to at least partially blocking ionic conductivity such that the electrochemical process within the battery cell is at least partly terminated. This reduces the maximum current the battery cell is able to output. In an ideal case, the current is reduced to 0 A. In most cases, a residual current higher than 0 A will remain, while such residual current is low enough to not heat the battery cell to a critical state.

Favorably, the minimum value is at least 100°C, preferably 130°C. With such a minimum value it is ensured, that the blocking on ionic conductivity is not performed in case non-critical behavior of the battery cell is detected. Particularly, the blocking is not triggered by normal heating of the battery cell due to normal operations. Therefore, failure of the battery system due to unintended shutdown of the battery cell is avoided.

An electrical resistance of the short-circuit line including the switch preferably is between 20 µΩ and 1000 µΩ, particularly between 50 µΩ and 250 µΩ, when the switch is closed. This means that high currents can flow through the short-circuit line. The short-circuit line is therefore adapted to limit the short-circuit current flowing through the damage zone. In the same way, the current is high enough to heat up the battery cell due to increased chemical work in order to trigger shutdown of the battery cell. Hence, the battery cell can be transferred to a safe state within a short period of time.

The switching time of the switch is preferably between 0,1 ms and 100 ms, preferably between 0,1 ms and 5 ms. Due to such a switching time, the switch can close the short-circuit line within a short period such that the time the short-circuit current flows through the damage zone only is shortened. Hence, the local heating of the damage zone can be reduced to a value below the first maximum temperature. This means that the switching time given above reduces the risk of triggering thermal runaway.

The first maximum value is at most 180 %, preferably 150 % of the second maximum value. Since the first maximum value is only reached for a short period of time, higher temperatures are required to trigger thermal runaway. Particularly, the first maximum value corresponds to local heating, since high currents which only flow over a short period are mostly local currents. This means that no thermal runaway will be triggered in case of local high temperatures, which are above the second maximum value, but which are present only for a short period.

Preferably, the short-circuit line is arranged to carry a maximum current of 15000 A, particularly 8000 A. Such currents allow an effective discharge of the battery cell while at the same time the temperature can be increased to cause the medium block the ionic conductivity. Further, such currents ensure that the short-circuit current within the damage zone is limited and does not locally heat up the battery cell in order to avoid thermal runaway of the battery cell.

The invention further regards a method for discharging a battery system. The battery system preferably being a battery system as described above. The method comprises the steps of actuating the switch to close the shortcut line and of discharging the battery in response to closing the shortcut line. Actuating the switch is also described as triggering the switch in the following. The step of actuating is performed after detection of a damage zone with an internal shortcut of the battery cell. Said detection can be performed via a monitoring system known from the prior art. The step of discharging the battery cell via the shortcut line comprises a peak phase, a plateau phase, and a shutdown phase. The peak phase is shorter than the plateau phase while the discharging current through the shortcut line in the peak phase is higher than in the plateau phase. In the peak phase, the highest discharging currents of the whole discharging step flow. Further, in the shutdown phase, the discharging current through the shortcut line is lower than in the plateau phase. This is due to the fact the shutdown phase is triggered by the medium blocking the ionic conductivity. In particular, the shutdown phase begins a soon as the battery cell is heated up enough in the plateau phase to cause the medium to block the ionic conductivity.

In the method, preferably a peak phase, a plateau phase, and a shutdown phase applies. The peak phase preferably follows a switching phase in which the switch is actuated. The peak phase takes between 0.1 s and 2.5 s, preferably between 0.3 s and 1.2 s, with an average discharging current between 1500 A and 15000 A, particularly between 3000 A and 8000 A. The plateau phase takes between 2 s and 300 s, preferably between 5 s and 60 s, with an average discharging current between 300 A and 5000 A, particularly between 800 A and 3000 A. Finally, in the shutdown phase, a maximum discharging current of 1000 A, particularly between 100 A and 400 A, flows through the short-circuit line until the battery cell is fully discharged. In the peak phase, the damage zone heats up locally due to the high current flowing through the short-circuit within the damage zone. By actuating the switch, preferably with the above mentioned switching times, the current, which flows through the damage zone, can be limited due to the discharging current flowing through the short-circuit line. The electrical resistance of the short-circuit line is selected such that the above mentioned discharging current flows. Due to such a discharging current, the remaining current, which flows through the damaged zone, is small enough to maintain below the first maximum value such that particularly no thermal runaway can be triggered. In the plateau phase, the whole battery cell heats up due to generation of the discharging current. This heating is intended to reach a shutdown temperature of the media within the separator, which means the temperature for the media to block the ionic conductivity. Said temperature is the above described minimum temperature which is below the second maximum temperature such that no thermal runaway can be triggered. As soon as the shutdown temperature is reached, the battery cell goes into shutdown. In the shutdown, the ionic conductivity is highly reduced or completely blocked such that the discharging current is limited.

In the method it is preferred that the overall temperature of the battery cell in the shutdown phase is limited to a predefined temperature, particularly to 60°C. In the shutdown phase, the medium within the separator blocks ionic conductivity such that the discharging current is limited. In an ideal case, the residual current after blocking ionic conductivity is 0 A, but in most cases a higher residual current will flow. Since the temperature of the battery cell is limited to the predefined temperature, the residual current will never trigger thermal runaway. The battery cell is therefore transferred to a safe state. Preferably, the temperature is limited by limiting the residual current due to providing the media such that ionic blocking occurs over the whole surface of the first electrode and second electrode.

### Explanation of the drawings

Embodiments of the invention will be described together with the attached drawings. In the drawings,
- Figure 1: is a schematic view of a battery system according to an embodiment of the present invention,
- Figure 2: is a schematic diagram of temperature in case of thermal runaway,
- Figure 3: is a schematic of a discharging current when discharging the battery system according to the embodiment, and
- Figure 4: is a schematic diagram of the temperature of the battery system according to the embodiment when discharging.

### Embodiments of the invention

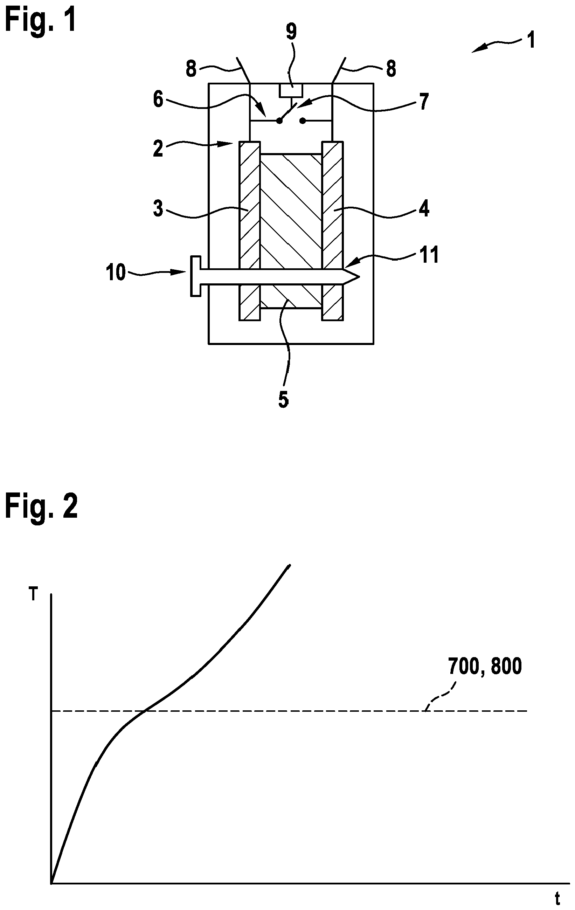

Figure 1 shows a battery system 1 according to an embodiment of the present invention. The battery system 1 comprises at least one battery cell 2, which has a first electrode 3 and a second electrode 4 with a separator 5 provided there between, wherein the battery cell 3 preferably includes Al-foil und Cu-foil tab bundles as the first electrode 3 and second electrode 4.

The first electrode 3 and the second electrode 4 are connected to terminals 8 in order to supply electrical power to further instances. In order to realize high energy densities, Ni-rich cathode material is employed. However, such high energy densities might be problematic in case of a hazardous event, which particularly includes nail penetration and/or crush and/or internal short circuit. In figure 1, a nail penetration is shown as an exemplary hazardous event. The nail 10 leads to a damage zone 11, in which the first electrode 3 and the second electrode 4 are shortcut. The shortcut in the damage zone 11 leads to high currents and heats up the battery system 1. In order to prevent thermal runaway initiated at any position of the battery cell 2 during the hazardous event, three different features in the battery cell 2 ensure safety:
A short-circuit line 6 is provided between the first electrode 3 and the second electrode 4 with a total resistance Rₜₒₜ of 20 to 1000µOhm, preferably 50 to 250µOhm. Due to such a resistance, the short-circuit line 6 is capable of carrying currents of up to several thousand amperes for several seconds.

A safety switch 7 is provided within the short-circuit line 6. This safety switch 7 is also termed FDD (fast discharge device). The switch can be triggered by a control device 9 upon detection of a hazardous event in order to close the short-circuit line 6. The switch 7 can be operated with switching times between 0.1 and 100ms, preferably 0.1 to 5ms. Hence, closing the switch results in an external short circuit of the battery cell 2 such that the battery cell 2 is discharged. The above explained total resistance Rₜₒₜ of the shortcut line 6 applies in case the switch 7 is in its closed state.

A medium is provided inside the separator 5 which has the property to permanently block the ionic conductivity when it is heated above a threshold temperature. One example for such a medium are the so called "shut down separators" which can be used as separator 5 inside the battery cell 2 and display this feature around 130°C. Other shut down temperatures can also be used for this invention. In the following, the term "shut down separator" will be used as a synonym for all media displaying this feature. In the following, the block of the ionic conductivity will also be described as shutdown of the battery cell 2.

During a critical hazardous event, a short circuit at the damage zone 11 occurs inside the battery cell 2. The current flow through this short circuit will heat up the battery cell 2 locally around the damage zone 11 to a temperature which can trigger the thermal runaway of the cell and can thus leads to fire or explosion. This is illustrated in figure 2. Figure 2 is a schematic diagram of the temperature within the battery cell 2, wherein the axis of abscissae shows the time and the axis of ordinate shows the overall temperature of the battery cell 2. It is shown in figure 2 that after reaching a threshold value 700, 800, an exothermic chemical reaction will be started such that the temperature increases even further. This leads to fire or explosion of the battery cell 2.

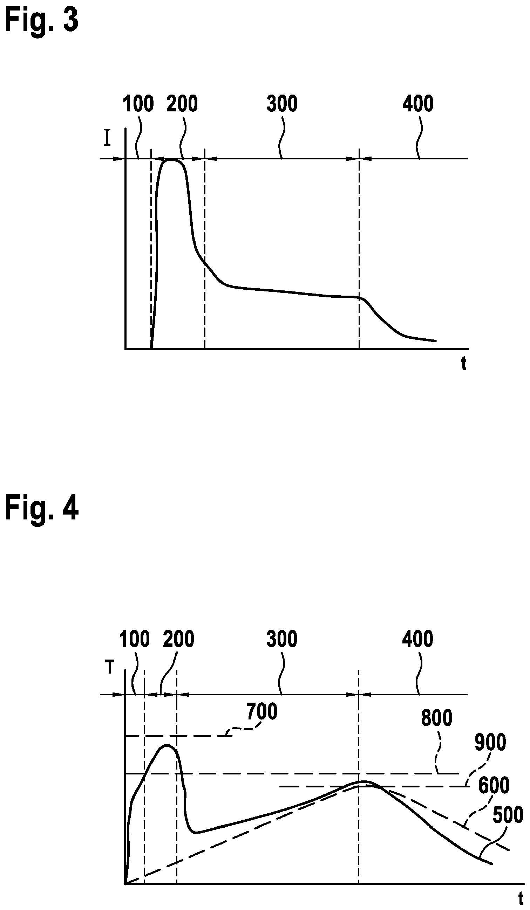

Thermal runaway can be triggered from two different threshold values 700, 800. On the one hand, the battery cell 2 can heat up locally, particularly at the damage zone 11. Such a local heating does not cause to thermal runaway in case it is of short time. On the other hand, the battery cell 3 can heat up globally, which increases the risk of thermal runaway. The differences between these two threshold values 700, 800 are further explained below with reference to figure 4.

When short-circuiting the battery cell by closing the switch 7, a characteristic current profile as shown in figure 3 will flow through the short-circuit line 6 in both cases, with or without a simultaneous hazardous event. Particularly, after a switching phase 100, in which the switch 7 is actuated to close the shortcut line 6, the current profile can be separated into three different phases. The exact duration of and the exact current during the different phases can be adjusted by the mechanical and electrochemical cell design and the boundary conditions such as clamping and/or isolation and/or cooling.

After the switching phase 100, a peak phase 200 applies with duration between 0.1 seconds and 2.5 seconds, preferably 0.3 to 1.2 seconds, and peak currents of 1500 A to 15000 A, preferably 3000 A to 8000 A.

After the peak phase 200, a plateau phase 300 applies with duration between 2 seconds and 300 seconds, preferably 5 seconds to 60 seconds, and average currents of 300 A to 5000 A, preferably 800 A to 3000 A.

Finally, a shutdown phase 400 applies following the plateau phase 300. In the shutdown phase 400, a residual current of 0 A to 1000 A, preferably 100 A to 400 A flows until the battery cell 2 is fully discharged In the shutdown phase 400, the above described shutdown separator blocks the transport of ions such that the residual current limited to the mentioned values.

The battery system 1 according to the embodiment can prevent thermal runaway by triggering the switch 7, particularly via the control device 9, upon detection of the damage zone 11. The damage zone is preferably detected by detecting the short circuit through a specific algorithm from the control device 9 of the battery system 1.

After actuating the switch 7, the current will split between the paths through the damage zone 11 and the short-circuit line 6. How much residual current will flow in the damage zone 11 depends on the ratio of the resistances of the two different paths. The external resistance Rₜₒₜ is therefore adjusted to make sure that most of the current flows through the shortcut line 6. Specific resistances of the shortcut line 6 suitable to reach a safe state are given above.

The thermal runaway has to be prevented during the entire time of the fast discharge until the battery cell 3 goes into shut down and also after the shut down until the cell is fully discharged (i.e. during the shutdown phase 400). Due to the short-circuit line 6 and the separator 5 functioning as shutdown separator as described above, thermal runaway of the battery cell 3, also with Ni-rich cathode material, is effectively prevented.

During the peak phase 200, the local temperature at the damage zone 11 is limited to a first maximum value 700, which corresponds to an onset temperature for thermal runaway. The onset temperature is a threshold which can be reached only for a limited time in order to prevent thermal runaway. Said time preferably is at most 5 seconds, particularly at most 2 seconds.

During the plateau phase 300, the battery cell 2 will heat up globally as a result of the chemical work done to provide the discharging current. This global heating will continue until the temperature for the almost complete shutdown is reached. The shutdown temperature corresponds to a minimum temperature 900 that has to be reached due to heating the battery cell 2 via high discharging currents. As the shutdown is not an instantaneous process, the global temperature is limited to a second maximum value 800, which is a threshold for triggering thermal runaway. The temperature in the damage zone 11 will decrease from the value it reached during the peak phase 200 at the beginning of the plateau phase 300 owing to the smaller current flowing in the damage zone 11 and may increase again later as the battery cell 2 heats up globally. In any case, it must stay below the onset temperature for local and global thermal runaway.

Since the first maximum 700 value is only reached for a short time, the first maximum value 700 is higher than the second maximum value 800. Particularly, the first maximum value is at most 180% of the second maximum value 800, preferably at most 150% of the second maximum value.

After the shutdown, which is usually not complete such that there is a residual current flow, the discharging current must be low enough that both the temperature in the damage zone 11 and the global temperature do not increase anymore and drop to a safe level. Preferably, the temperature drops to a level of maximum 60°C until the battery cell 2 is fully discharged and the discharging current goes to 0 A. How long this takes depends critically on the cell design, the degree of shutdown and the location of the areas with incomplete shutdown of the separator 5. Nevertheless, due to reducing the temperature to the above described level, it is ensured that the remaining discharging current can never trigger thermal runaway.

In summary, the invention allows the use of high energy density chemical systems (e.g. NCM811, NCA) in large capacity battery cells while maintaining safety both for real failure cases (e.g. internal short circuits) and abuse testing (e.g. nail penetration testing).

As an example: current 18650 NCA cells (4.2 Ah) used for example in electric cars are not safe (hazard level > 4) in nail penetration testing while safety (hazard level 2 to 3) was demonstrated for cells > 50 Ah using the concept described above.

## Claims

1. Battery system (1) comprising
• at least one battery cell (2) including a first electrode (3), a second electrode (4), and a separator (5) for separating the first electrode (3) and second electrode (4),
• a short-circuit line (6) for short-circuiting the first electrode (3) and second electrode (4), wherein the short-circuit line (6) includes a switch (7) for selectively opening and closing the short-circuit line (6),
• a control device (9) for actuating the switch (7) to close the short-circuit line (6) after detection of a damage zone (11) with an internal short-circuit of the battery cell (2),
• wherein a local temperature at the damaged zone is limited to a predefined first maximum value (700) and the overall temperature of the battery cell (2) is limited to a second maximum value (800),
• wherein the first maximum value (700) is higher than the second maximum value (800), and
• wherein the separator (5) comprises a medium adapted to block ionic conductivity when heated above a temperature of a minimum value (900), which is lower than the second maximum value (800).

2. Battery system (1) according to claim 1, **characterized in that** the separator (5) is a shutdown separator.

3. Battery system (1) according to any one of the previous claims, **characterized in that** the minimum value (900) is at least 100°C, preferably 130°C.

4. Battery system (1) according to any one of the previous claims, **characterized in that** an electrical resistance of the short-circuit line (6) including the switch (7), is between 20 µΩ and 1000 µΩ, preferably between 50 µΩ and 250 µΩ, when the switch (7) is closed.

5. Battery system (1) according to any one of the previous claims, **characterized in that** the switching time of the switch (7) is between 0,1 ms and 100 ms, preferably between 0,1 ms and 5 ms.

6. Battery system (1) according to any one of the previous claims, **characterized in that** the first maximum value (700) is at most 180 %, preferably 150 % of the second maximum value (800).

7. Battery system (1) according to any of the previous claims, **characterized in that** the shortcut line (6) is arranged to carry a maximum current of 15000 A, particularly 8000 A.

8. Method for discharging a battery system (1) according to any one of the previous claims, **characterized by**
• actuating the switch (7) to close the short-circuit line (6) after detection of a damage zone (11) with an internal short-circuit of the battery cell (2), and
• discharging the battery cell (2) via the short-circuit line (6), wherein the discharging comprises a peak phase (200), a plateau phase (300), and a shutdown phase (400),
• wherein the peak phase (200) is shorter than the plateau phase (300) while the discharging current through the short-circuit line (6) in the peak phase (200) is higher than in the plateau phase (300), and
• wherein the discharging current through the short-circuit line (6) in the shutdown phase (400) is lower than in the plateau phase (300).

9. Method according to claim 8, **characterized in that**
• the peak phase (200) takes between 0.1 s and 2.5 s, preferably between 0.3 s and 1.2 s, with an average discharging current between 1500 A and 15000 A, particularly between 3000 A and 8000 A,
• the plateau phase (300) takes between 2 s and 300 s, preferably between 5 s and 60 s, with an average discharging current between 300 A and 5000 A, particularly between 800 A and 3000 A, and
• in the shutdown phase (400), a maximum discharging current of 1000 A, particularly 400 A, flows through the short-circuit line (6) until the battery cell (2) is fully discharged.

10. Method according to claim 8 or 9, **characterized in that** the overall temperature of the battery cell (2) in the shutdown phase (400) is limited to a predefined temperature, particularly to 60°C.
